# FASCICULE DE BREVET EUROPEEN

(11) **EP 3 222 476 B1**
(45) Date de publication et mention de la délivrance du brevet: **30.01.2019**
(21) Numéro de dépôt: 17159919.4
(22) Date de dépôt: 08.03.2017
(51) Int. Cl.: B60S 1/40

(54) **ADAPTATEUR DE RACCORDEMENT DE L'EXTRÉMITÉ LIBRE D'UN BRAS D'ESSUIE-GLACE, ET ENSEMBLE COMPORTANT UN ADAPTATEUR ET UN BRAS D'ESSUIE-GLACE**
ADAPTER ZUR VERBINDUNG MIT DEM FREIE ENDE EINES WISCHARMS UND ANORDNUNG MIT EINEM ADAPTER UND EINEM WISCHARM
ADAPTER FOR CONNECTING THE FREE END OF A WIPER ARM, AND ASSEMBLY COMPRISING AN ADAPTER AND A WIPER ARM

(30) Priorité: 25.03.2016 FR 1652625
(43) Date de publication de la demande: 27.09.2017
(73) Titulaire: Valeo Systèmes d'Essuyage, 78322 Le Mesnil Saint Denis (FR)
(72) Inventeur: HOUSSAT, Stéphane, 63500 ISSOIRE (FR); JOMARD, Olivier, 63500 ISSOIRE (FR); GAUCHER, Vincent, 63500 ISSOIRE (FR)
(74) Mandataire: Vincent, Catherine Marie Marguerite

(56) Documents cités:
- EP-A1- 0 528 307
- KR-A- 20090 030 949
- US-A1- 2009 293 218
- US-A1- 2014 352 097

## Description

### DOMAINE TECHNIQUE DE L'INVENTION

L'invention concerne un adaptateur, aussi appelé pièce de raccordement, utilisé pour raccorder l'extrémité libre d'un bras d'essuie-glace à un élément d'une structure de support d'une lame d'essuyage d'un balai d'essuie-glace.

L'invention concerne aussi un ensemble comportant un tel adaptateur et un bras d'essuie-glace.

### ARRIERE PLAN TECHNIQUE DE L'INVENTION

L'invention concerne plus particulièrement un adaptateur pour raccorder une extrémité en forme de crochet en U du bras d'essuie-glace à un axe d'articulation qui s'étend transversalement entre deux joues latérales parallèles de l'élément de support de la lame d'essuyage, cet élément de support étant par exemple réalisé sous la forme d'un étrier principal d'articulation.

Selon une conception connue d'un tel adaptateur de raccordement, il comporte deux ailes latérales parallèles dont les faces externes verticales sont prévues pour être reçues transversalement entre les faces internes verticales opposées en vis-à-vis de joues latérales parallèles de l'élément de support et dont les faces internes en vis-à-vis sont prévues pour coopérer avec les bords latéraux parallèles et verticaux du crochet d'extrémité du bras d'essuie-glace. EP-A-0528307 montre le préambule de la revendication 1.

Dans une telle conception, les ailes parallèles sont reliées entre elles par un corps transversal avant qui se prolonge longitudinalement vers l'arrière par deux branches opposées et qui délimite un logement de palier dans lequel peut être introduit l'axe d'articulation.

Le corps avant est délimité par une surface cylindrique externe convexe qui est reçue dans un fond concave complémentaire du crochet en U de l'extrémité du bras d'essuie-glace.

Un tel type d'adaptateur est satisfaisant et permet notamment de réaliser de manière simple le montage d'un balai d'essuie-glace sur l'extrémité libre en forme de crochet en U du bras d'essuie-glace.

De manière connue, la partie principale du corps du bras d'essuie-glace et sa portion d'extrémité en forme de crochet en U sont réalisées sous la forme d'une barre métallique pliée de section rectangulaire dont la largeur transversale correspond sensiblement à la distance séparant les faces internes opposées en vis-à-vis des ailes parallèles de l'adaptateur.

Toutefois, une telle conception d'un adaptateur ne permet pas, à l'aide du même adaptateur, de monter un balai d'essuie-glace sur des bras d'essuie-glace de dimensions différentes et notamment lorsque les dimensions longitudinales de la portion d'extrémité en forme de crochet en U varie d'un bras d'essuie-glace à l'autre.

Afin de s'adapter notamment à aux moins trois gammes de dimensions différentes de l'extrémité en forme de crochet d'un bras d'essuie-glace, le document US-A1-2014/0352097 propose une conception d'un adaptateur comportant un corps destiné à être reçu dans un fond concave du crochet d'extrémité et une branche de verrouillage qui s'étend longitudinalement depuis le corps avant et qui porte une série de trois ergots de verrouillage en saillie dont chacun est destiné à être reçu dans une lumière de verrouillage du crochet d'extrémité du bras d'essuie-glace, en fonction des dimensions du crochet d'extrémité.

Une telle conception a notamment pour inconvénient d'augmenter la hauteur hors-tout de l'adaptateur aboutissant, en fonction des dimensions du crochet d'extrémité, soit à une partie de la patte de verrouillage d'encombrement important située hors du crochet, soit à un montage avec une compression verticale importante de l'adaptateur à l'intérieur du crochet.

L'invention vise à proposer un adaptateur, notamment de dimensions réduites, qui permet le montage d'un balai d'essuie-glace sur au moins deux bras d'essuie-glace dont les dimensions de la portion d'extrémité libre en forme de crochet en U sont différentes.

### BREF RESUME DE L'INVENTION

L'invention propose un adaptateur, pour le raccordement d'un balai d'essuie-glace à une extrémité avant en forme de crochet en U d'un bras d'essuie-glace, comprenant :
- un corps avant de profil externe convexe, destiné à être reçu dans un fond avant concave du crochet d'extrémité ;
- et au moins une branche qui s'étend longitudinalement vers l'arrière depuis le corps avant et qui porte un seul ergot de verrouillage en saillie destiné à être reçu dans une lumière de verrouillage du crochet d'extrémité du bras d'essuie-glace, caractérisé en ce que l'adaptateur comprend au moins deux crans transversaux de positionnement longitudinal de l'adaptateur, décalés longitudinalement l'un par rapport à l'autre dont l'un ou l'autre est destiné à coopérer avec un bord transversal arrière d'un crochet d'extrémité en fonction des dimensions du crochet d'extrémité.

Selon d'autres caractéristiques de l'invention :
- l'adaptateur comporte au moins une patte de positionnement déformable élastiquement, et au moins deux crans de positionnement sont portés par la patte de positionnement ;
- la patte de positionnement est une poutre déformable élastiquement qui pivote autour d'un axe orthogonal à la direction longitudinale de l'adaptateur ;
- la patte de positionnement s'étend longitudinalement vers l'arrière, et au moins deux crans de positionnement sont formés au voisinage d'une extrémité libre arrière de la patte de positionnement ;
- la patte de positionnement s'étend longitudinalement dans le prolongement de la branche de l'adaptateur qui porte l'ergot de verrouillage ;
- l'adaptateur comprend deux ailes latérales parallèles entre lesquelles le corps avant s'étend transversalement et dont les faces internes en vis-à-vis sont prévues pour coopérer avec des faces latérales externes du crochet d'extrémité, et la branche et la patte de positionnement s'étendent longitudinalement entre ces faces internes ;
- l'adaptateur comprend deux ailes latérales parallèles entre lesquelles le corps avant s'étend transversalement et dont les faces internes en vis-à-vis sont prévues pour coopérer avec des faces latérales externes du crochet d'extrémité, et la patte de positionnement s'étend longitudinalement dans le prolongement d'une de ces ailes ;
- chacune des deux ailes est prolongée longitudinalement vers l'arrière par une patte de positionnement ;
- l'ergot de verrouillage est délimité par une face transversale de butée orientée longitudinalement vers l'arrière ;
- chaque patte de positionnement porte au moins trois crans de positionnement décalés longitudinalement l'un par rapport à l'autre ;
- le corps avant comporte un élément élastique destiné à être monté comprimé élastiquement contre une portion en vis-à-vis du fond concave du crochet d'extrémité ;
- l'adaptateur est réalisé en une seule pièce moulée en matière plastique.

L'invention propose aussi un ensemble comprenant un bras d'essuie-glace comportant une extrémité avant en forme de crochet en U et un adaptateur selon l'invention, caractérise en ce qu'un tronçon du crochet d'extrémité du bras d'essuie-glace est positionné longitudinalement sans jeu entre, d'une part, une face transversale de butée orientée longitudinalement vers l'arrière de l'ergot de verrouillage et, d'autre part, un desdits crans de positionnement.

Selon une autre caractéristique de l'ensemble, la lumière de verrouillage est délimitée longitudinalement vers l'arrière par un bord transversal qui est maintenu, par ladite au moins une patte élastique, en appui longitudinal contre la face transversale de butée de l'ergot de verrouillage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective éclatée qui représente un ensemble selon une conception de l'état de la technique constitué d'un bras d'essuie-glace, d'un adaptateur et d'un étrier principal d'articulation d'une lame d'essuyage ;
- la figure 2 est une vue en perspective à grande échelle (en vue de dessous) d'un adaptateur du type de celui représenté à la figure 1 selon un premier mode de réalisation de l'invention ;
- la figure 3 est une vue latérale de détail à grande échelle de la portion d'extrémité avant en forme de crochet en U du bras d'essuie-glace illustré à la figure 1 ;
- la figure 4A est une vue en coupe, selon le plan 4-4 de la figure 2 qui illustre l'adaptateur représenté à la figure 2 en position montée dans une portion d'extrémité en forme de crochet en U d'un bras d'essuie-glace d'une première série de dimensions ;
- les figure 4B et 4C sont des vues analogues à celle de la figure 4A qui illustrent le même adaptateur en position montée dans deux bras d'essuie-glace de dimensions différentes ;
- la figure 5 est une vue en section selon le plan 5-5 de la figure 2 qui illustre l'adaptateur en position dans la portion d'extrémité en forme de crochet en U du balai d'essuie-glace de la figure 4A ;
- les figures 6A à 6C sont des vues analogues à celles des figures 4A à 4C qui illustrent un deuxième mode de réalisation d'un adaptateur selon l'invention.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative et sans référence à la gravité terrestre, des orientations longitudinale, verticale et transversale indiquées par le trièdre "L,V,T" des figures. On définit aussi un plan horizontal qui s'étend longitudinalement et transversalement.

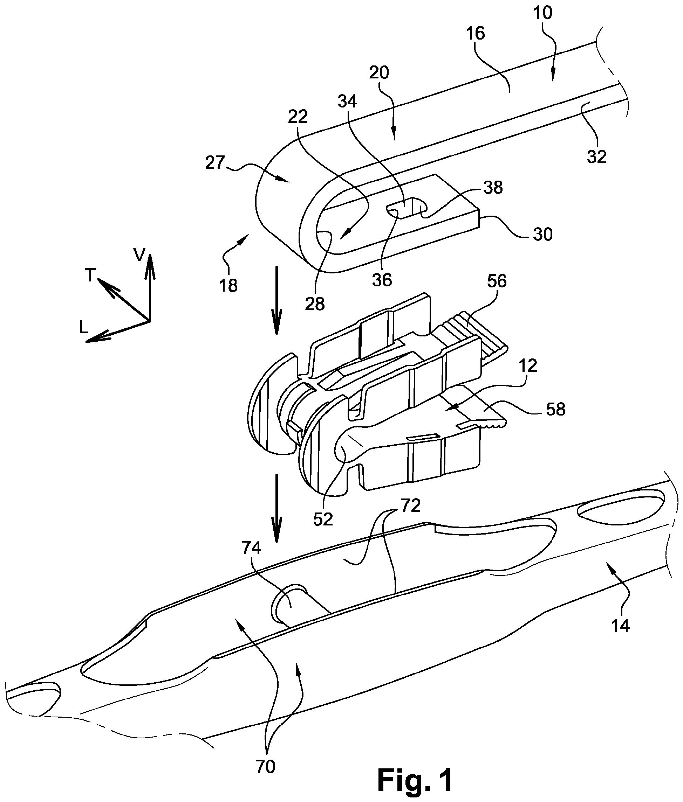

A la figure 1, on a représenté une portion d'un bras d'essuie-glace 10, aussi appelé bras d'entraînement, qui est associé à un adaptateur 12 pour le raccordement mécanique du bras d'essuie-glace 10, ici à un étrier principal 14 de support d'une lame d'essuyage (non représentée) d'un essuie-glace.

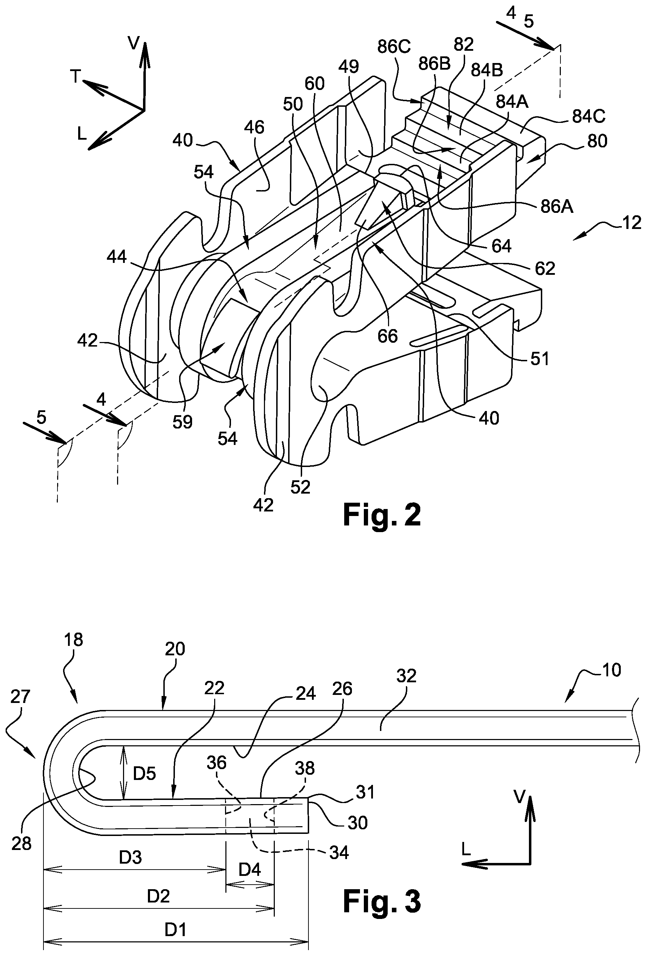

La partie longitudinale avant du bras d'essuie-glace 10 représentée notamment aux figures 1 et 2 prolonge le corps principal 16 du bras d'essuie-glace 10 et est conformée en un crochet 18 en forme de U.

La partie d'extrémité libre en forme de crochet 18 en U est constituée d'un brin supérieur horizontal 20, d'un brin inférieur horizontal 22 dont chacun est délimité par une face horizontale plane 24, 26 respectivement.

Les deux brins horizontaux parallèles 20 et 22 sont reliés entre eux par un brin d'extrémité longitudinal avant 27 courbe conformé en un arc semi cylindrique qui délimite intérieurement un fond semi cylindrique concave 28.

Le tronçon inférieur 22 est délimité longitudinalement vers l'arrière par une face transversale et verticale d'extrémité arrière 30.

De manière connue, au voisinage de la face d'extrémité arrière 30, le brin inférieur 22 comporte, une lumière de verrouillage 34 qui est ici un trou vertical débouchant qui est délimité longitudinalement par un bord d'extrémité avant 36 et par un bord d'extrémité arrière 38 dont chacun est conformé avec un profil arrondi concave.

De manière connue, le bras d'essuie-glace 10 et notamment sa portion d'extrémité avant en forme de crochet 18 en U, est réalisé sous la forme d'une barre métallique à section transversale rectangulaire (ici à angles arrondis) qui est coupée et pliée, et qui est délimitée transversalement par deux faces latérales verticale externes 32.

Parmi certaines des dimensions caractéristiques de la portion d'extrémité 18, on a indiqué, à la figure 3, la distance longitudinale D1 séparant le bord d'extrémité longitudinale avant-du brin recourbé 27 de la face transversale d'extrémité arrière 30 du brin 22 ; la distance D2 séparant ce bord du bord d'extrémité arrière 38 de la lumière de verrouillage 34 ; la distance D3 séparant ce bord du bord d'extrémité avant 36 de la lumière de verrouillage 34 ; la distance longitudinale D4 séparant les deux bords d'extrémité avant 36 et arrière 38 de la lumière de verrouillage 34 ; ainsi que la distance verticale D5 séparant les faces horizontales opposées et en vis-à-vis 24 et 26, cette distance D5 correspondant sensiblement au diamètre du fond concave de profil semi-cylindrique circulaire 28 du brin recourbé 27.

Comme on peut le voir notamment aux figures 1 et 2, l'adaptateur 12 est ici une pièce moulée en une seule pièce en matière plastique qui comporte deux ailes latérales verticales et longitudinales opposées 40 qui, au voisinage de leurs extrémités libres avant à profil arrondi convexe 42, sont reliées entre elles par un corps avant 44 de forme générale cylindrique convexe qui s'étend transversalement entre des portions en vis-à-vis des faces internes opposées 46 des ailes latérales 40.

Le corps avant 44 se prolonge longitudinalement vers l'arrière par deux branches longitudinales sensiblement horizontales dont une branche supérieure 48 et une branche inférieure 50 forment un V.

Comme le corps avant 44, les deux branche supérieure 48 et inférieure 50 s'étendent transversalement entre des portions en vis-à-vis des faces latérales internes opposées 46 des ailes latérales 40.

Le corps avant 44 est évidé intérieurement et délimite un logement interne cylindrique circulaire concave 52, d'axe géométrique A, qui est apte à recevoir à rotation une tige d'articulation 74 de profil et de dimension complémentaires appartenant ici à l'étrier d'articulation 14.

Le corps avant 44 et les branches 48 et 50 comportent ici deux nervures externes en relief 54 d'orientation générale longitudinale et qui sont parallèles.

Il s'agit de nervures de renfort de manière que, sans l'endommager, l'adaptateur 12 se présente sous la forme d'une "pince" à deux branches 48 et 50 qui est déformable élastiquement, par rapport à son état de repos représenté notamment aux figures 1 et 2, pour rapprocher verticalement ou écarter l'une de l'autre les deux branches 48 et 50.

Selon l'état de la technique, au voisinage de son extrémité longitudinale arrière 49, 51 respectivement chaque branche 48, 50 comporte une languette 56, 58 de préhension de manière, en agissant sur au moins une languette, à permettre la déformation de l'adaptateur 12 par rapprochement vertical des branches 48 et 50 comme mentionné précédemment.

Sur sa face externe 60, la branche inférieure 50 comporte un seul ergot de verrouillage 62 qui est formé en saillie et qui s'étend globalement verticalement vers le bas.

L'ergot de verrouillage 62 est dimensionné de manière à pouvoir pénétrer, avec jeu, verticalement vers le bas à l'intérieur de la lumière de verrouillage 34.

L'ergot de verrouillage 62 est délimité longitudinalement vers l'arrière par une face transversale de butée 64 à profil arrondi convexe qui est orientée longitudinalement vers l'arrière et qui est apte à coopérer avec le bord d'extrémité arrière 38 de la lumière de verrouillage 34.

Sur sa surface externe convexe, le corps avant 44 comporte une lame élastique formant ressort 59 qui est apte à coopérer avec une portion en vis-à-vis du fond concave 28 du brin courbé 27 de la portion d'extrémité en forme de crochet 18 en U du bras d'essuie-glace 10.

En position montée de l'adaptateur 12 à l'intérieur de la portion d'extrémité en forme de crochet 18 en U, la lame formant ressort 59 est montée comprimée longitudinalement de manière à exercer longitudinalement vers l'arrière, un effort tendant à plaquer la face transversale arrière de butée 64 de l'ergot de verrouillage 62 contre le bord arrière 38 de la lumière de verrouillage 34.

L'étrier principal 14, représenté à titre d'exemple non limitatif à la figure 1, est ici une pièce par exemple en tôle découpée et pliée dont la partie centrale est constituée pour l'essentiel par deux joues verticales et longitudinales parallèles 70 dont chacune est délimitée par une face verticale interne 72 entre lesquelles s'étend transversalement une tige d'articulation 74 qui est apte à être reçue dans le logement 52 du corps avant 44 de l'adaptateur 12.

De manière connue, l'assemblage s'effectue ici en mettant d'abord en place l'adaptateur 12 sur la tige d'articulation 74 en emboîtant cette dernière longitudinalement d'arrière en avant jusque dans le logement 52, puis en venant mettre en place la portion d'extrémité en forme de crochet 18 en U du bras d'essuie-glace 10 dans laquelle l'adaptateur 12 est emboîté longitudinalement, d'arrière en avant, jusqu'à ce que l'ergot de verrouillage 62 pénètre et s'emboîte dans la lumière de verrouillage 34.

Cette opération est réalisée en comprimant légèrement la lame formant ressort 59 et elle est facilitée par le profil avant en forme de rampe inclinée 66 de l'ergot de verrouillage 62 qui coopère avec un bord transversal horizontal supérieur arrière 31 en vis-à-vis du brin inférieur 22 pour provoquer une déformation élastique au moins de la branche inférieure 50.

Lorsque l'on souhaite procéder au démontage, et donc au déverrouillage de la portion d'extrémité en forme de crochet en U 18 du bras d'essuie-glace 10 de l'adaptateur 12, l'opérateur doit agir sur la branche, ici inférieure 50, portant l'ergot 62 pour la déformer verticalement vers le haut et provoquer sa sortie hors de la lumière de verrouillage 34 et ceci ici en agissant sur la languette 58.

Dans cette conception selon l'état de la technique, à l'exception de l'ergot de verrouillage et de la lame formant ressort, l'adaptateur présente une double symétrie générale de conception, d'une part par rapport à un plan vertical longitudinal médian et, d'autre part, par rapport à un plan longitudinal horizontal médian.

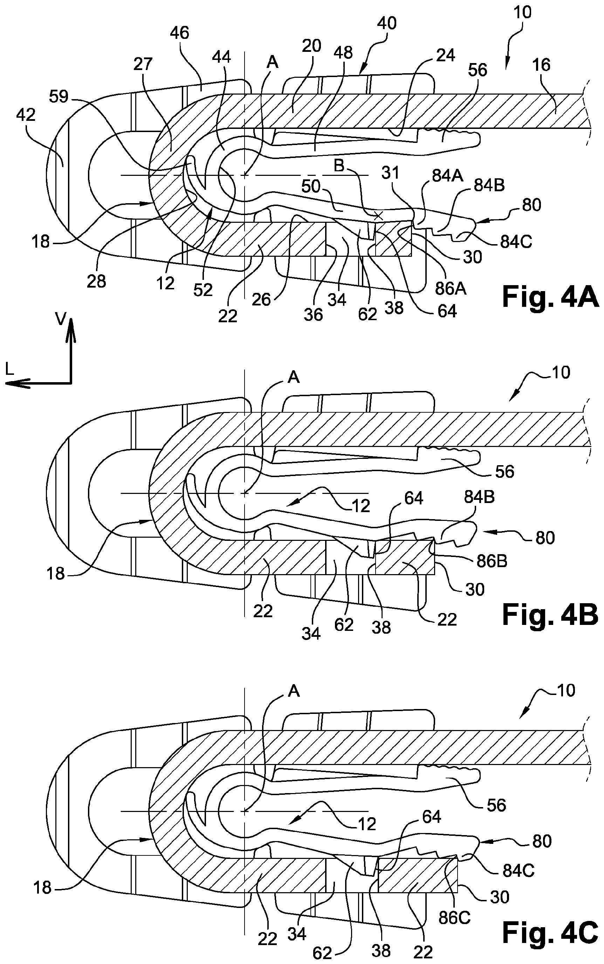

On décrira maintenant le premier mode de réalisation d'un adaptateur selon l'invention tel qu'illustré notamment aux figures 4A à 4C en référence et par comparaison avec ce qui a été décrit relativement à un adaptateur 12 selon l'état de la technique tel qu'illustré à la figure 1.

Dans la description des modes de réalisation selon l'invention, la conception générale du bras d'essuie-glace 10 avec sas portion d'extrémité en forme de crochet en U est identique à celle décrite précédemment en référence à l'état de la technique.

La conception de l'adaptateur 12 selon l'invention se caractérise par les modifications apportées à la portion d'extrémité arrière de la branche inférieure 50 - qui porte l'ergot de verrouillage 62 - qui se présente sous la forme d'une patte déformable élastiquement 80 de positionnement longitudinal et de rattrapage des jeux permettant, au moyen d'un même adaptateur 12, le raccordement ici de trois bras d'essuie-glace 10 dont la portion d'extrémité avant en forme de crochet 18 en U est de dimensions différentes, notamment au regard des dimensions longitudinales D1, D2 et D3.

A cet effet, la branche inférieure 50 se prolonge longitudinalement vers l'arrière à partir de son bord d'extrémité arrière 49 par une patte 80 qui est conformée en une poutre déformable élastiquement qui peut pivoter autour d'un axe d'orientation transversale B qui est situé longitudinalement sensiblement au droit du bord 49.

La face inférieure 82 de la patte de positionnement 80 présente un profil en escalier à trois marches qui sont décalées longitudinalement vers l'arrière l'une par rapport à l'autre et verticalement vers le bas depuis l'avant vers l'arrière.

Ces trois marches forment ici un groupe qui est décalé longitudinalement vers l'arrière par rapport à l'ergot de verrouillage 62.

Chacune des trois marches 84A, 84B, 84C est délimitée longitudinalement vers l'avant par une face transversale verticale 86A, 86B, 86C qui constitue un cran, orienté vers l'avant, apte à coopérer avec une portion en vis-à-vis de la face transversale d'extrémité arrière 30 du brin inférieur 22 de la portion d'extrémité en forme de crochet 18 en U du balai d'essuie-glace 10.

Comme on peut le voir aux figures 4A à 4C, en fonction des dimensions longitudinales de la portion d'extrémité en forme de crochet 18 en U du bras d'essuie-glace 10, c'est soit le cran 84A qui coopère avec la face transversale d'extrémité 30 (figure 4A), soit le cran 86B (figure 4B), soit le cran 86C (figure 4C).

Dans chacun de ces trois cas, le tronçon d'extrémité arrière du brin inférieur 22 qui s'étend entre le bord d'extrémité arrière 38 de la lumière de verrouillage 34 et la face transversale d'extrémité arrière 30 est reçu longitudinalement sans jeu entre le bord d'extrémité arrière convexe 64 de l'ergot de verrouillage 62 et le cran associé 86A, 86B, ou 86C de la patte de positionnement 80.

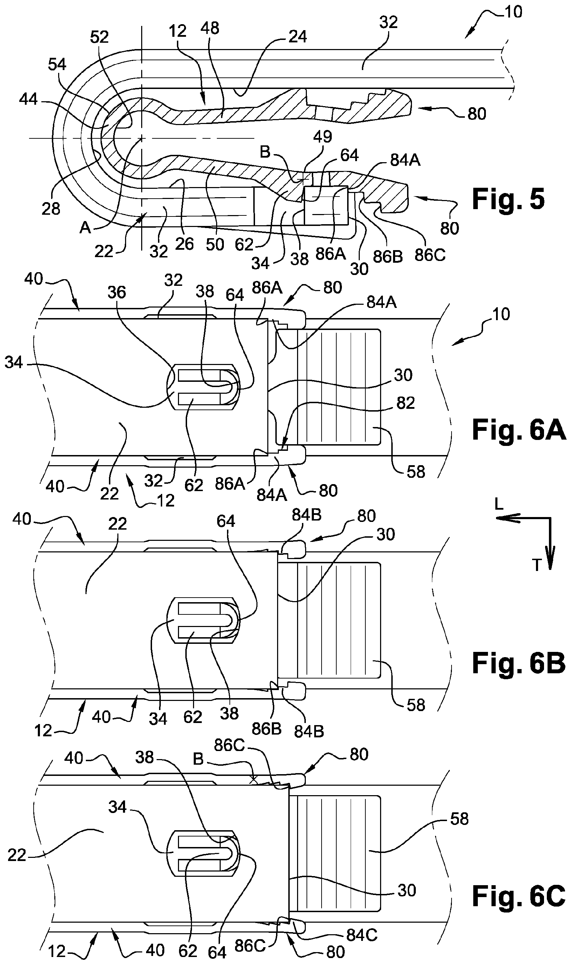

A titre de variante, sur la figure 5 et sur la figure 2, la partie d'extrémité arrière de la branche supérieure 48 est réalisée de manière identique et symétrique à celle de la branche inférieure 50, c'est-à-dire qu'elle est aussi conçue sous la forme d'une patte de positionnement 80 à profil en escalier comportant des crans de positionnement et un ergot de verrouillage de manière à conférer à l'adaptateur 12 une structure symétrique permettant de le monter indifféremment dans l'un ou l'autre sens.

Comme on peut le voir aux figures 4A, 4B et 4C, la portion d'extrémité libre de la patte de positionnement 80 qui fait plus ou moins saillie longitudinalement vers l'arrière au-delà de la face transversale d'extrémité arrière 30 du brin inférieur 22 permet, comme précédemment avec la languette 58, d'agir sur la branche inférieure 50 pour la déformer élastiquement et extraire l'ergot de verrouillage 62 hors de la lumière de verrouillage 34 pour procéder au démontage.

On décrira maintenant le deuxième mode de réalisation d'un adaptateur 12 selon l'invention tel qu'il est illustré aux figures 6A à 6C.

Par rapport à l'adaptateur 12 selon l'état de la technique, les crans de positionnement longitudinal de la portion d'extrémité en forme de crochet 18 en U du bras d'essuie-glace 10 par rapport à l'adaptateur 12 sont ici formés sur au moins une patte de positionnement 80 qui s'étend dans un plan longitudinal et vertical dans le prolongement d'une aile latérale verticale 40.

De plus, les dimensions de l'adaptateur selon l'invention permettant le montage et l'assemblage avec des crochets d'extrémité de dimensions différentes, sont réduites en étant sensiblement égales à celles de l'adaptateur selon l'état de la technique illustré par exemple à la figure 1.

Tel qu'illustré, selon le deuxième mode de réalisation, l'adaptateur 12 présente une symétrie générale de conception par rapport à un plan vertical médian et il comporte ainsi deux pattes de positionnement 80 dont chacune s'étend dans le prolongement d'une aile latérale verticale associée 40.

C'est la face longitudinale et verticale intérieure (ou interne) 82 de la patte de positionnement 80 qui présente un profil en escalier à trois marches 84A, 84B, 84C qui sont décalées longitudinalement d'avant en arrière l'une par rapport à l'autre et transversalement vers l'intérieur l'une par rapport à l'autre, d'avant en arrière.

Ainsi, comme précédemment en référence au premier mode de réalisation, en fonction des dimensions de la portion d'extrémité en forme de crochet 18 en U du bras d'essuie-glace 10, c'est l'une ou l'autre des trois paires de crans 86A, 86B ou 86C qui coopère avec une portion en vis-à-vis de la face transversale d'extrémité arrière 30 du brin inférieur 22.

Dans les différents exemples de réalisation qui ont été représentés et décrits, l'ergot de verrouillage est porté par la branche qui est adjacente au brin inférieur « court » 22. Toutefois, à titre de variante non représentée, l'ergot unique peut être prévu sur l'autre branche de l'adaptateur adjacente au brin supérieur 20, ce dernier comportant alors une lumière complémentaire de l'ergot de verrouillage.

L'invention trouve à s'appliquer pour tout type de balai d'essuie-glace et notamment pour des balais dits de type plat (aussi appelés « balai flat blade »), ou dits de type « hybride ».

## Revendications

1. Adaptateur (12), pour le raccordement d'un balai d'essuie-glace (10) à une extrémité avant (18) en forme de crochet en U d'un bras d'essuie-glace (10), adaptateur (12) comprenant :
- un corps avant (44) de profil externe convexe, destiné à être reçu dans un fond avant concave (28) du crochet d'extrémité (18) ;
- et au moins une branche (50) qui s'étend longitudinalement vers l'arrière depuis le corps avant (44) et qui porte un seul ergot de verrouillage (62) en saillie destiné à être reçu dans une lumière de verrouillage (34) du crochet d'extrémité (18) du bras d'essuie-glace (10),
**caractérisé en ce qu'**il comprend au moins deux crans (86A, 86B, 86C) transversaux de positionnement longitudinal de l'adaptateur, décalés longitudinalement l'un par rapport à l'autre dont l'un ou l'autre est destiné à coopérer avec un bord transversal (30) du crochet d'extrémité (18), en fonction de la dimension du crochet d'extrémité.

2. Adaptateur selon la revendication 1, **caractérisé en ce qu'**il comporte au moins une patte de positionnement (80) déformable élastiquement, et **en ce que** les au moins deux crans de positionnement (86A, 86B, 86C) sont portés par la patte de positionnement (80).

3. Adaptateur selon la revendication 2, **caractérisé en ce que** la patte de positionnement (80) est une poutre déformable élastiquement qui pivote autour d'un axe (B) orthogonal à la direction longitudinale.

4. Adaptateur selon l'une des revendications 2 ou 3, **caractérisé en ce que** la patte de positionnement (80) s'étend longitudinalement vers l'arrière, et **en ce que** les au moins deux crans de positionnement sont formés au voisinage d'une extrémité libre arrière de la patte de positionnement (80).

5. Adaptateur selon la revendication 4, **caractérisé en ce que** la patte de positionnement (80) s'étend longitudinalement dans le prolongement de ladite branche (50) qui porte l'ergot de verrouillage (62).

6. Adaptateur selon la revendication 5, **caractérisé en ce qu'**il comprend deux ailes latérales (40) parallèles entre lesquelles le corps avant (44) s'étend transversalement et dont les faces internes en vis-à-vis (46) sont prévues pour coopérer avec des faces latérales externes (32) du crochet d'extrémité (18), et **en ce que** ladite branche (50) et la patte de positionnement (80) s'étendent longitudinalement entre lesdites faces internes (46).

7. Adaptateur selon la revendication 4, **caractérisé en ce qu'**il comprend deux ailes latérales (40) parallèles entre lesquelles le corps avant (44) s'étend transversalement et dont les faces internes en vis-à-vis (46) sont prévues pour coopérer avec des faces latérales externes (32) du crochet d'extrémité (18), et **en ce que** la patte de positionnement (80) s'étend longitudinalement dans le prolongement d'une desdites ailes (40).

8. Adaptateur selon la revendication 7, **caractérisé en ce que** chacune des deux ailes (40) est prolongée longitudinalement vers l'arrière par une patte de positionnement (80).

9. Adaptateur selon la revendication 1, **caractérisé en ce que** l'ergot de verrouillage (62) est délimité par une face transversale de butée (64) orientée longitudinalement vers l'arrière.

10. Adaptateur selon l'une quelconque des revendications 2 à 8, **caractérisé en ce que** chaque patte de positionnement (80) porte au moins trois crans (86A, 86B, 86C) de positionnement décalés longitudinalement l'un par rapport à l'autre.

11. Adaptateur selon la revendication 1, **caractérisé en ce que** le corps avant (44) comporte un élément élastique (59) destiné à être monté comprimé élastiquement contre une portion en vis-à-vis du fond concave (28) du crochet d'extrémité (18).

12. Adaptateur selon l'une quelconque des revendications précédentes, **caractérisé en ce qu'**il est réalisé en une seule pièce moulée en matière plastique.

13. Ensemble comprenant un bras d'essuie-glace (10) comportant une extrémité avant (18) en forme de crochet en U et un adaptateur (12) selon l'une quelconque des revendications précédentes, **caractérisé en ce qu'**un tronçon du crochet d'extrémité (18) du bras d'essuie-glace (10) est positionné longitudinalement sans jeu entre une face transversale de butée (64) orientée longitudinalement vers l'arrière de l'ergot de verrouillage (62) et un desdits crans de positionnement.

14. Ensemble selon la revendication 13 prise en combinaison avec la revendication 2, **caractérisé en ce que** la lumière de verrouillage (34) est délimitée longitudinalement vers l'arrière par un bord transversal (38) qui est maintenu par ladite au moins une patte élastique (80) en appui longitudinal contre la face transversale de butée (64) de l'ergot de verrouillage (62).

## Patentansprüche

1. Adapter (12) zum Verbinden eines Wischerblatts (10) mit einem vorderen Ende (18) in U-Hakenform eines Wischerarms (10), wobei der Adapter (12) umfasst:
- einen vorderen Körper (44) mit konvexem Außenprofil, der dazu bestimmt ist, in einer konkaven vorderen Vertiefung (28) des Endhakens (18) aufgenommen zu werden;
- und mindestens einen Schenkel (50), der sich in Längsrichtung vom vorderen Körper (44) nach hinten erstreckt und der einen einzelnen vorstehenden Verriegelungsbolzen (62) trägt, der dazu bestimmt ist, in einem Verriegelungsschlitz (34) des Endhakens (18) des Wischerarms (10) aufgenommen zu werden,
**dadurch gekennzeichnet, dass** er mindestens zwei Querrasten (86A, 86B, 86C) zur Längspositionierung des Adapters umfasst, die in Längsrichtung voneinander versetzt sind, wobei die eine oder andere der mindestens zwei Rasten mit einer Querkante (30) des Endhakens (18) in Abhängigkeit von der Abmessung des Endhakens zusammenwirkt.

2. Adapter nach Anspruch 1, **dadurch gekennzeichnet, dass** er mindestens eine elastisch verformbare Positionierungslasche (80) umfasst und dadurch, dass die mindestens zwei Positionierungsrasten (86A, 86B, 86C) von der Positionierungslasche (80) getragen werden.

3. Adapter nach Anspruch 2, **dadurch gekennzeichnet, dass** die Positionierungslasche (80) ein elastisch verformbarer Stab ist, der um eine zur Längsrichtung orthogonale Achse (B) schwenkt.

4. Adapter nach einem der Ansprüche 2 oder 3, **dadurch gekennzeichnet, dass** sich die Positionierungslasche (80) in Längsrichtung nach hinten erstreckt und dadurch, dass die mindestens zwei Positionierungsrasten nahe einem hinteren freien Ende der Positionierungslasche (80) ausgebildet sind.

5. Adapter nach Anspruch 4, **dadurch gekennzeichnet, dass** sich die Positionierungslasche (80) in Längsrichtung in der Verlängerung des Schenkels (50) erstreckt, der den Verriegelungsbolzen (62) trägt.

6. Adapter nach Anspruch 5, **dadurch gekennzeichnet, dass** er zwei parallele seitliche Flügel (40) umfasst, zwischen denen sich der vordere Körper (44) quer erstreckt und deren einander zugewandte Innenflächen (46) so gestaltet sind, dass sie mit den seitlichen Außenflächen (32) des Endhakens (18) zusammenwirken, und dadurch, dass sich der Schenkel (50) und die Positionierungslasche (80) in Längsrichtung zwischen den Innenflächen (46) erstrecken.

7. Adapter nach Anspruch 4, **dadurch gekennzeichnet, dass** er zwei parallele seitliche Flügel (40) umfasst, zwischen denen sich der vordere Körper (44) quer erstreckt und deren einander zugewandte Innenflächen (46) so gestaltet sind, dass sie mit den seitlichen Außenflächen (32) des Endhakens (18) zusammenwirken, und dadurch, dass sich die Positionierungslasche (80) in Längsrichtung in der Verlängerung einer der Flügel (40) erstreckt.

8. Adapter nach Anspruch 7, **dadurch gekennzeichnet, dass** jeder der zwei Flügel (40) durch eine Positionierlasche (80) in Längsrichtung nach hinten verlängert ist.

9. Adapter nach Anspruch 1, **dadurch gekennzeichnet, dass** der Verriegelungsbolzen (62) durch eine in Längsrichtung nach hinten gerichtete Queranschlagsfläche (64) begrenzt ist.

10. Adapter nach einem der Ansprüche 2 bis 8, **dadurch gekennzeichnet, dass** jede Positionierungslasche (80) mindestens drei Positionierungsrasten (86A, 86B, 86C) trägt, die in Längsrichtung voneinander versetzt sind.

11. Adapter nach Anspruch 1, **dadurch gekennzeichnet, dass** der vordere Körper (44) ein elastisches Element (59) umfasst, das dazu bestimmt ist, zusammengedrückt elastisch gegen einen gegenüberliegenden Abschnitt der konkaven Vertiefung (28) des Endhackens (18) angebracht zu werden.

12. Adapter nach einem der vorhergehenden Ansprüche, **dadurch gekennzeichnet, dass** er einstückig als Kunststoffformteil hergestellt ist.

13. Anordnung, umfassend einen Wischerarm (10), umfassend ein vorderes Ende (18) in U-Hakenform und einen Adapter (12) nach einem der vorhergehenden Ansprüche, **dadurch gekennzeichnet, dass** ein Abschnitt des Endhakens (18) des Wischerarms (10) in Längsrichtung ohne Spiel zwischen einer Queranschlagsfläche (64), die in Längsrichtung des Verriegelungsbolzens (62) nach hinten ausgerichtet ist, und einer der Positionierungsrasten positioniert ist.

14. Anordnung nach Anspruch 13, in Kombination mit Anspruch 2, **dadurch gekennzeichnet, dass** der Verriegelungsschlitz (34) in Längsrichtung nach hinten durch eine Querkante (38) begrenzt ist, die von der mindestens einen elastischen Lasche (80) in Längsrichtung gegen die Queranschlagsfläche (64) des Verriegelungsbolzens (62) anliegend gehalten wird.

## Claims

1. Adapter (12) for connecting a wiper blade (10) to a U-shaped hooked front end (18) of a wiper arm (10), the adapter (12) comprising:
- a front body (44) with convex external profile, intended to be received in a concave front closed-end (28) of the end hook (18);
- and at least one branch (50) which extends longitudinally towards the rear from the front body (44) and which carries a single projecting locking stud (62) intended to be received in a locking slot (34) of the end hook (18), of the wiper arm (10),
**characterized in that** it comprises at least two transverse notches (86A, 86B, 86C) for the longitudinal positioning of the adapter, these being longitudinally offset relative to one another and one or another of which is intended to collaborate with a transverse edge (30) of the end hook (18) according to the dimension of the end hook.

2. Adapter according to Claim 1, **characterized in that** it comprises at least one elastically deformable positioning tab (80), and **in that** the at least two positioning notches (86A, 86B, 86C) are carried by the positioning tab (80).

3. Adapter according to Claim 2, **characterized in that** the positioning tab (80) is an elastically deformable beam which pivots about an axis (B) orthogonal to the longitudinal direction.

4. Adapter according to one of Claims 2 and 3, **characterized in that** the positioning tab (80) extends longitudinally towards the rear, and **in that** the at least two positioning notches are formed near a rear free end of the positioning tab (80).

5. Adapter according to Claim 4, **characterized in that** the positioning tab (80) extends longitudinally in the continuation of the said branch (50) that carries the locking stud (62).

6. Adapter according to Claim 5, **characterized in that** it comprises two parallel lateral wings (40) between which the front body (44) extends transversely and the mutually-facing internal faces (46) of which are designed to collaborate with external lateral faces (32) of the end hook (18), and **in that** the said branch (50) and the positioning tab (80) extend longitudinally between the said internal faces (46).

7. Adapter according to Claim 4, **characterized in that** it comprises two parallel lateral wings (40) between which the front body (44) extends transversely and the mutually-facing internal faces (46) of which are designed to collaborate with external lateral faces (32) of the end hook (18), and **in that** the positioning tab (80) extends longitudinally in the continuation of one of the said wings (40).

8. Adapter according to Claim 7, **characterized in that** each of the two wings (40) is extended longitudinally towards the rear by a positioning tab (80).

9. Adapter according to Claim 1, **characterized in that** the locking stud (62) is delimited by a transverse thrust face (64) oriented longitudinally towards the rear.

10. Adapter according to any one of Claims 2 to 8, **characterized in that** each positioning tab (80) carries at least three positioning notches (86A, 86B, 86C) that are longitudinally offset relative to one another.

11. Adapter according to Claim 1, **characterized in that** the front body (44) comprises an elastic element (59) intended to be mounted elastically compressed against a facing portion of the concave closed-end (28) of the end hook (18).

12. Adapter according to any one of the preceding claims, **characterized in that** it is produced as a single piece as a plastic moulding.

13. Assembly comprising a wiper arm (10) comprising a U-shaped hooked front end (18) and an adapter (12) according to any one of the preceding claims, **characterized in that** a portion of the end hook (18) of the wiper arm (10) is positioned longitudinally without play between a transverse thrust face (64) oriented longitudinally towards the rear of the locking stud (62), and one of the said positioning notches.

14. Assembly according to Claim 13 considered in combination with Claim 2, **characterized in that** the locking slot (34) is delimited longitudinally towards the rear by a transverse edge (38) which is kept by the said at least one elastic tab (80) pressed longitudinally against the transverse thrust face (64) of the locking stud (62).
